Europäisches Patentamt

European Patent Office

Office européen des brevets

(19)

(11) **EP 0 689 279 B1**

(12) **EUROPEAN PATENT SPECIFICATION**

(45) Date of publication and mention
of the grant of the patent:
**15.03.2000 Bulletin 2000/11**

(51) Int Cl.⁷: **H02K 57/00**

(21) Application number: **95109553.8**

(22) Date of filing: **20.06.1995**

(54) **Operation motor with two degrees of freedom and controller thereof**

Motor für Betrieb in zwei Freiheitsgraden und Steuerung hierfür

Moteur pour l'opération à deux degrés de liberté et dispositif de commande pour celui-ci

(84) Designated Contracting States:
**DE FR GB**

(30) Priority: **20.06.1994 JP 16059494**
**26.12.1994 JP 33714894**

(43) Date of publication of application:
**27.12.1995 Bulletin 1995/52**

(73) Proprietor: **MITSUBISHI JUKOGYO KABUSHIKI KAISHA**
**Tokyo (JP)**

(72) Inventors:
• **Sakakibara, Kiyokatsu,**
**c/o Nagoya Guidance & Prop.**
**Higashi Tanaka, Komaki-shi, Aichi-ken (JP)**

• **Ando, Yohei, c/o Nagoya Guidance & Propulsion**
**Higashi Tanaka, Komaki-shi, Aichi-ken (JP)**
• **Nakanishi, Teruo,**
**c/o Nagoya Guidance & Propulsion**
**Higashi Tanaka, Komaki-shi, Aichi-ken (JP)**

(74) Representative: **Henkel, Feiler, Hänzel**
**Möhlstrasse 37**
**81675 München (DE)**

(56) References cited:
**DE-A- 2 906 404**       **US-A- 4 234 831**

• **PATENT ABSTRACTS OF JAPAN vol. 17, no. 289 (E-1375), 1993 & JP 05 015134 A (MATSUSHITA EL.)**

**Description**

Background of the Invention

1. Field of the Invention

The present invention relates to a cylindrical operating motor with two degrees of freedom for performing a rotation and a linear operation which is suited to a motor for operating joints of a robot, and to a controller for controlling such a motor.

2. Description of the Prior Art

Heretofore, as an operating motor with two degrees of freedom for use in the operation of joints of a robot, a motor shown in a perspective view of Fig. 16 is available. A motor of this general type is also known from DE 29 06 404 A. This cylindrical motor incorporates a cylindrical stationary part 41a for linear operation, a stationary part 41b for rotation, a cylindrical moving part 42 inserted into both stationary parts 41a and 41b, and both stationary parts 41a and 41b incorporate electromagnet 43a for linear operation, and electromagnet 43b for rotation. On the external periphery of the moving part 42, coils 44a and 44b are wound so as to be opposed to each of the electromagnets 43a and 43b. Further, a bearing 45 with two degrees of freedom is engaged with the moving part 42 on both sides of the coils 44a and 44b with the result that the moving part 42 moves in a linear direction while rotating. In other words, the output shafts of the rotation type stepping motor and a linear operation type stepping motor are connected.
However, in such a cylindrical motor, a stroke in a linear direction is limited by the limit on the bearing. Further, two stepping motors are combined with each other with the result that the rotation and the linear operation cannot be performed at the same time in principle. Thus, the operation of the two motors becomes discrete. Consequently, the continuous operation of the two stepping motors is realized artificially in a voluntary direction by reducing a step width and by adopting a controlling method. However, such improvement is limited.
Document US 4 234 831 A discloses a motor capable of performing rotary, linear and helical motions. This known motor comprises a moving part in the form of a permanent magnet and a stationary part having a bore in which the permanent magnet part can move. The stationary part takes the form of a series of stator sections of stepper motors, whereby the axial length of the moving part is such that it is surrounded by at least two stator sections. Each stator section generates four magnetic poles, corresponding poles of successive stator sections being axially aligned. Rotational motion of the moving part is produced by first control signals from a controller, which successively energise the poles of all the stator sections around the circumference of the stationary part. Axial motion is generated by second control signals from the controller, which successively energise the magnetic poles lying axially side by side. Combined axial and rotary movement can be produced by a commercially available control system.

Summary of the Invention

The present invention is proposed in view of such circumstances. An object of the present invention is to provide a cylindrical operating motor with two degrees of freedom, and a controller thereof, the motor having a wide scope of operation and being capable of simultaneously and continuously performing a rotation and a linear movement operation with a simple mechanism.
This and other objects are achieved according to a first embodiment of the invention by an operating motor according to the appended claim 1. In this motor the moving part is embedded with magnetic bodies, while the stationary part is mounted with electromagnets. According to a second embodiment of the invention, defined in the appended claim 2, the electromagnets are placed in the moving part and the magnetic bodies in the stationary part.
According to a third embodiment of the invention, defined in the appended claim 3, there is provided a controller for controlling the operating motor of claims 1 or 2. In these motors the magnetic elements and electromagnets each form arrays, being disposed at predetermined intervals on two straight lines mutually forming an angle of 60 on the facing cylindrical surfaces of the moving part and stationary part. According to a fourth embodiment of the invention there is provided a controller, defined in the appended claim 5, for controlling a similar motor, in which, however, the two straight lines are directed along the axis and the circumference of the cylindrical surfaces.
In the operating motor with two degrees of freedom having such a basic structure, the moving part is movably supported on both ends of the bearing in the stationary part by exciting the electromagnet with the result that the motor can freely perform the linear operation and the rotation.
The controller controls the above-mentioned operating motors with two degrees of freedom so as to perform the linear movement or the rotation of the moving part. In other words, the next operation is set either to the axial line or to the circumference line, and the time distribution between the axial operation and the circumferential operation is determined on the basis of the operation direction instruction signal. Then the relative position between the moving part and the stationary part is determined on the basis of the position signal and angle signal of the moving part detected by the detector. Next, an excitation pattern of the corresponding electromagnet is determined in a selection part from the operation direction instruction signal and the relative position information between the moving part and stationary part, providing instructions concerning the excitation pattern to the output part, exciting the electromagnet at a predetermined position and thereby controlling the moving part at a necessary position.

According to the present invention, by providing a structure in which magnetic bodies (or electromagnets) are arranged at a completely cylindrical moving part, electromagnets (or magnet bodies) are arranged at a stationary part embracing the moving part, and at the same time a bearing is provided for freely and movably supporting the moving part using an outside surface of the moving part as an object of the bearing, the operation scope of the moving part can be widened. When the magnetic body is provided on the moving part, the electric wiring with respect to the moving part becomes unnecessary. Consequently, compared with the case in which the electromagnet is provided on the moving part, the constraint on the operation on the moving part is removed. Further, by arranging the electromagnets and the magnetic bodies on two straight lines forming an angle of 60 degrees, the fluctuation in the driving force can be reduced.

Further, according to the controller of the present invention, the moving part can be continuously operated in a desired direction with a simple control of selecting an electromagnet to be excited on the basis of the operation direction instruction and the relative position between the moving part and the stationary part. Further, by repeating and operating the moving part with a very short operating time interval both in the axial direction and in the circumferential direction, the controller can be operated in a smooth operation.

Brief Description of the Drawings

Fig. 1 is a partially broken perspective view of an operating motor with two degrees of freedom with a controller according to the fourth embodiment of the present invention.

Fig. 2 is a system view of a controller according to the fourth embodiment shown in Fig. 1.

Fig. 3 is a view illustrating an operation direction instruction in Fig. 2.

Fig. 4 is a view illustrating an axis/ circumference synthesis ratio in Fig. 2.

Fig. 5 is a view illustrating an operation of the operating motor with two degrees of freedom with the controller of the fourth embodiment. Fig. 5(A) is a view illustrating an excitation pattern when the moving part is operated in an axial direction while Fig. 5(B) is a view showing a state of excitation and non-excitation.

Fig. 6 is a view of an excitation pattern when the operating motor with two degrees of freedom with the controller of the fourth embodiment is operated in a circumferential direction.

Fig. 7 is a view showing a structure of the moving part and the stationary part in the operating motor with two degrees of freedom according to the first embodiment of the present invention.

Fig. 8 is a system view showing a controller according to the third embodiment.

Fig. 9 is a view showing an excitation pattern of the operating motor with two degrees of freedom according to the first embodiment of the present invention.

Fig. 10 is a view illustrating a positional relation between the moving part and the stationary part according to the first embodiment of the present invention.

Fig. 11 is a view illustrating a driving force in the fourth embodiment.

Fig. 12 is a view of a position at which no driving force in the fourth embodiment can be generated.

Fig. 13 is a view of a position at which no driving force in the first embodiment can be generated.

Fig. 14 is a perspective view showing a structure of a concrete apparatus according to the first embodiment of the present invention.

Fig. 15 is a perspective view showing part of an arrangement of the electromagnet and a salient pole according to the first embodiment shown in Fig. 14.

Fig. 16 is a perspective view showing a conventional operating motor with cylindrical shape.

Detailed Description of the Preferred Embodiments

An operating motor with two degrees of freedom according to the present invention will be explained on the basis of the drawings.

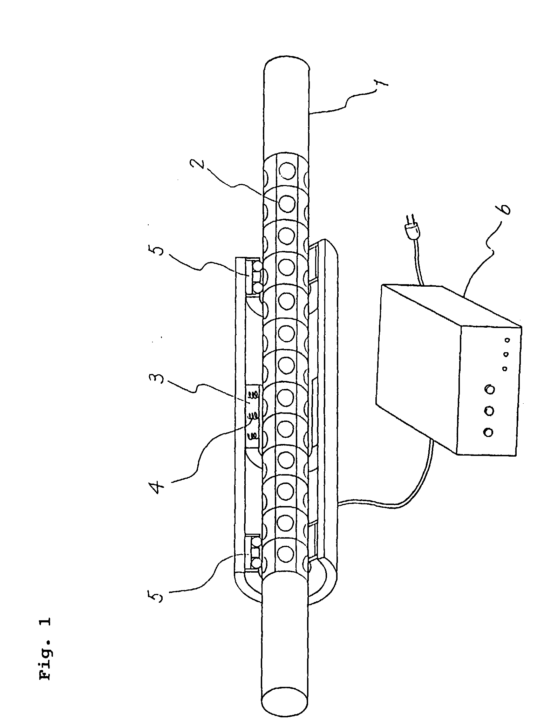

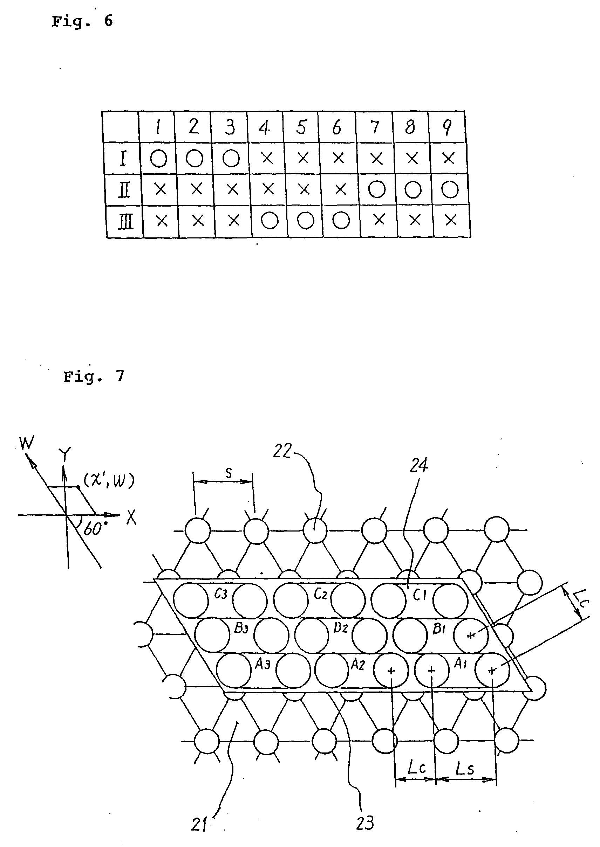

Figs. 1 to 6 show an operating motor and a controller according to the fourth embodiment of the invention, Figs. 7 to 10 and Figs. 13 to 15 show the operating motor according to the first embodiment thereof.

Referring to Fig. 1, a moving part 1 is a cylindrical body, which has a completely cylindrical outside surface. A plurality of magnet bodies (which may be salient poles) 2 are embedded along axial and circumferential lines so as to form an orthogonal lattice-like configuration. On an inside surface of a cylindrical stationary part 3 which embraces this moving part 1, a plurality of electromagnets 4 are incorporated in an orthogonal lattice-like configuration along axial and circumferential lines.

The magnetic bodies (salient poles) 2 and the electromagnets 4 may be arranged in a direction such that the magnetic bodies 2 and the electromagnets 4 are independent in a two-freedom degree space. The arrangement thereof may not be a perpendicular lattice-like configuration as shown in Fig. 1. Further, the spacings between the electromagnets 4 and the magnetic bodies (salient poles) 2 may be determined so that no dead point is generated. In the case shown in Fig. 1, the spacing ratio between the magnetic bodies 2 and the electromagnets 4 may be 2:3 as in a two-pole and three-phase brushless motor.

Further, on both sides of the stationary part 3, a bearing 5 is provided so that the completely cylindrical outside surface of the moving part 1 can be supported at any position in an axial direction. A controller 6 is provided in the vicinity of the stationary part 3 and is connected to each electromagnet 4. Further, this controller 6 is also connected to a position detector and an angle detector, not shown in Fig. 1, arranged on the moving part 1 or the stationary part 3, for detecting the relative position in the axial direction and in the circumferential direction.

This controller 6 is an apparatus for determining a control sequence for controlling generation of a magnetic field of the electromagnets 4 in the stationary part 3.

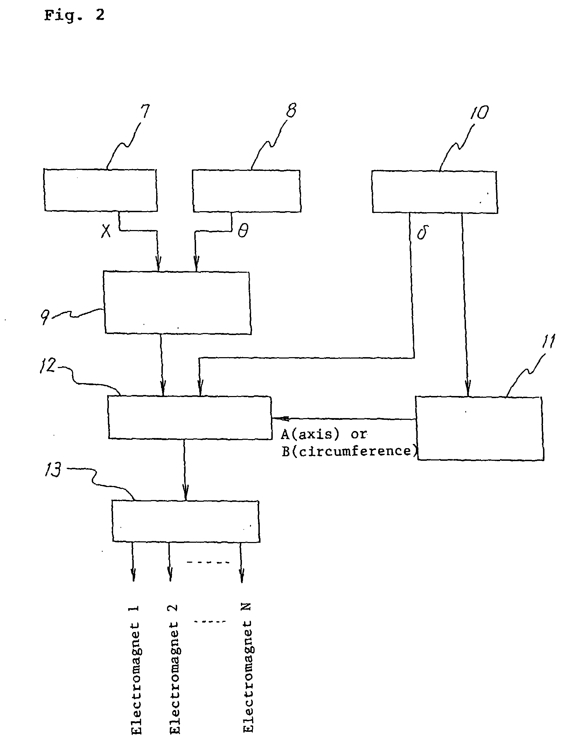

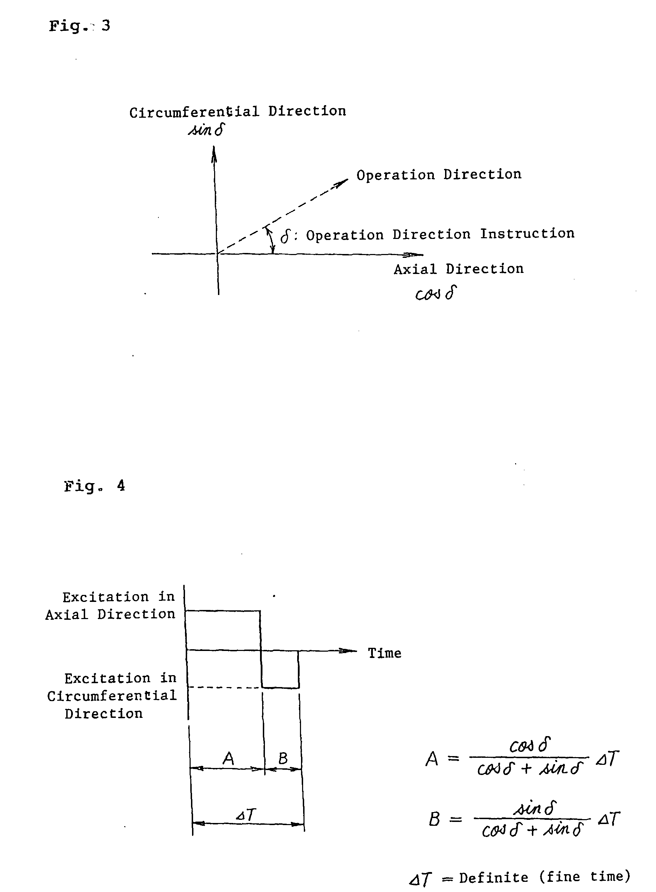

As shown in Fig. 2, this controller 6 comprises a moving part/stationary part relative position calculation part 9 for receiving an axial position signal X and an angle signal $\theta$ from the position detector 7 and the angle detector 8 to calculate the moving part/stationary part relative position, an operation direction instruction part 10 for outputting an operation direction instruction signal $\delta$ shown in Fig. 3, an axis/circumference synthesis ratio calculation part 11 for calculating a time ratio, namely a synthesis ratio for performing excitation in both axis/circumference directions, an exciting electromagnet selection part 12 for determining the electromagnet to be excited from the output signal from the calculation parts 9 and 11 and the operation direction instruction signal $\delta$, and an exciting current output part 13 for supplying current signals to each of the electromagnets No. 1 to No.N depending on the determination in the selection part 12.

Thus, a control sequence in such a motor goes as follows.

(1) The next operation is set either to the axial line or the circumference.
(2) The time distribution between the axial line and the circumferential operation is determined on the basis of the operation direction instruction signal $\delta$.
(3) The relative position between the moving part 1 and the stationary part 3 is determined on the basis of the axial position signal X and the angle signal $\theta$.
(4) The corresponding excitation pattern of the electromagnets 4 is selected from the operation direction instruction signal $\delta$ and the information on the relative position between the moving part 1 and the stationary part 3.
(5) The excitation pattern of the axial line and the circumferential operation is repeated and selected to repeat thereafter both operations on the basis of the time determined in (2).

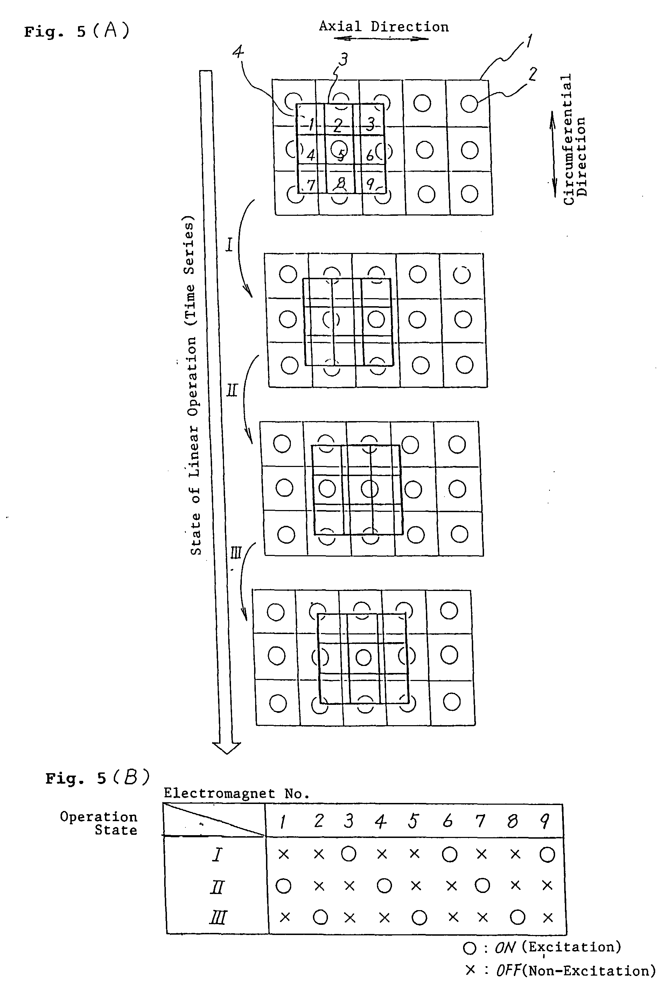

The sequence of the excitation pattern at the time of operating the moving part 1 will now be explained with reference to Fig. 5.

Fig. 5(A) shows the relative position relation between the stationary part 3 and the moving part 1 when the moving part 1 is moved to the left in the axial direction. Fig 5(B) shows an excitation pattern of nine electromagnets 4 (Nos. 1 to 9) of the stationary part 3 when the moving part 1 is moved to the left in the axial direction.

In other words, when the relative position between the stationary part 3 and the moving part 1 corresponds to the uppermost figure in Fig. 5(A), the electromagnets Nos. 3, 6 and 9 are turned on in the excitation pattern I. When the relative position therebetween corresponds to the second case in Fig. 5(A), the electromagnets Nos. 1, 4 and 7 are turned on in the excitation pattern II. When the relative position therebetween corresponds to the third case in Fig. 5(A), the electromagnets No. 2, No. 5 and No. 8 are turned on in the excitation pattern III. Consequently, the total amount of magnetic force of the magnetic bodies (salient poles) 2 and the electromagnets 4 coincides with the operation direction in each of the excitation patterns so that the moving part 1 moves to the left in the axial direction with respect to the stationary part 3 as shown in Fig. 5.

In other words, in the example shown in Fig. 5, (wherein three electromagnets 4 are present in the straight line direction), the position of moving part 1 having as its original point a certain reference point detected by the position detector belongs to one of the relations I to III shown in Fig. 5 relative to the stationary part 3. Therefore, by selecting the excitation patterns I to III based on the relative position, the moving part 1 is moved in the axial direction. The sequence of the excitation pattern when the moving part 1 is moved in the circumferential direction is shown in Fig. 6.

In this manner, in accordance with this embodiment, the controller 6 controls the plurality of magnetic bodies (salient poles) 2 and the electromagnets 4 so that the total amount of the magnetic force of the plurality of magnetic bodies 2 (salient poles) of the moving part 1 and the plurality of the electromagnets 4 of the stationary part 3 coincides with the operation direction of the moving part 1. Consequently, the circumferential operation and the axial direction operation can be performed simultaneously and continuously. Further, the completely cylindrical outside surface as a whole constitutes a bearing part with the result that the axial operation has a wide scope of operation compared with the prior art. Further, magnetic bodies (salient poles) 2 are mounted on the moving part 1 with the result that the wiring does not limit the scope of operation of the moving part 1 thereby reinforcing the freedom provided by the above-mentioned part of the bearing.

In the above description the explanation is given with respect to the case in which the magnetic bodies (salient poles) 2 are mounted on the moving part 1 and the electromagnets 4 are provided on the stationary part 3. However, the same effect and advantage can be provided when the magnetic bodies 2 are mounted on the stationary part 3 and the electromagnets 4 are provided on the moving part 1.

Next, a motor according to the first embodiment of the present invention will be explained. Fig. 7 shows a modified operating motor with two degrees of freedom as in the first motor illustrated in Fig. 1 wherein the arrangement relating to the alignment direction of the magnetic bodies and the electromagnets is changed. Other structures of the bearings or the like are the same as in the earlier motor.

The magnetic bodies (salient poles) 22 are embedded in the outside surface of the cylindrical moving part 21. Electromagnets 24 are embedded in the inside surface of the stationary part 23 embracing this moving part 21. As shown in Fig. 7, the magnetic bodies 22 and the electromagnets 24 are arranged with a constant spacing in a direction of two straight lines (X and W axes). The ratio, electromagnet spacing: magnetic body spacing = Lc: Ls is 2:3, which is the same as in the motor of Figs. 1-6.

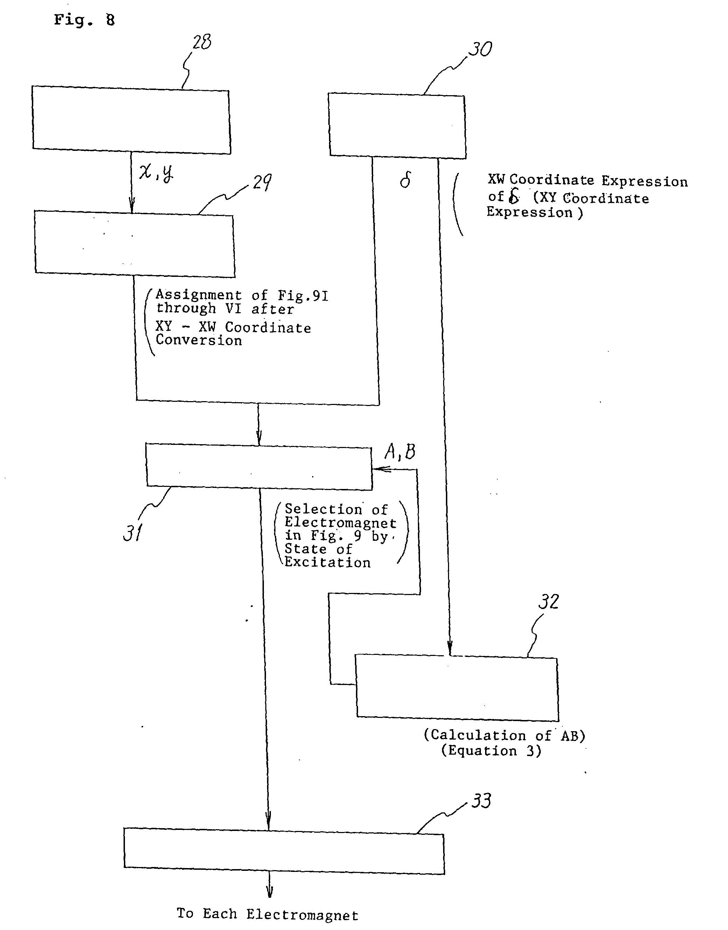

The operation of the controller for this motor will be explained with reference to Fig. 8. When a position signal in the X and Y directions of the moving part 21 is inputted from the position sensor 28, the moving part/stationary part relative position calculation part 29 converts the XY coordinate into the XW coordinate system on the basis of the following (equation 1) to determine the position signals in the X and W directions, which signals are outputted to the electromagnet excitation selection part 31.

XY→XW coordinate conversion;

Points in XY coordinates before conversion are set to (X, Y) while the expression after the conversion to the XW coordinates is set to (X',W), the following equation 1 is provided.

$$X' = X + Y \tan 30°$$

$$W = y/\cos 30° \qquad \text{(equation 1)}$$

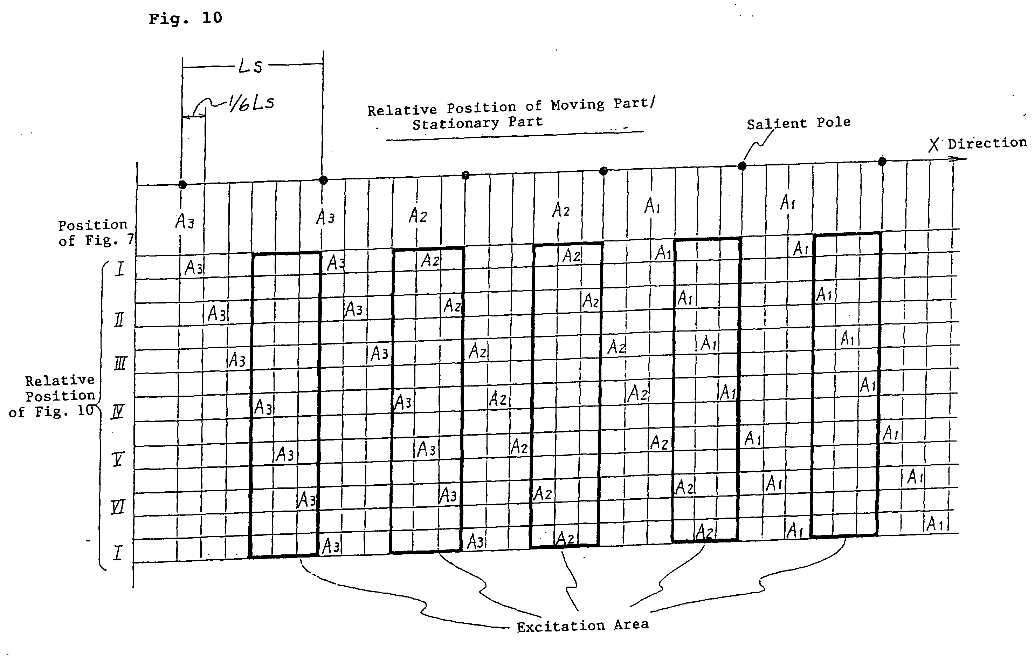

Here, with respect to the relative position relations of each electromagnet 24 to this position signal and each salient pole 22, the X direction of electromagnets A1 to A3 are given as an example and will be explained by referring to Fig. 10.

The relative positions of the electromagnets A1 to A3 to the salient poles 22 shown in Fig. 7 (deviation of electromagnet 24 in the +X direction with respect to the salient pole 22) will be as follows when each space between salient poles is equally divided into six parts. From the relations of Ls:Lc=3:2, A3 is set to 0, A2 to 4Ls/6, and A1 to 2Ls/6. When the position A3 of the moving part 21 shown in Fig. 7 is set to X=0, the relative position A3 of the electromagnet is repeated every movement of Ls/6 in a direction of +X in such a manner as $0 \rightarrow Ls/6 \rightarrow 2Ls/6 \rightarrow 3Ls/6 \rightarrow 4Ls/6 \rightarrow 5Ls/6 \rightarrow 6Ls/6(=0) \rightarrow Ls/6$. In the same manner, electromagnet A2 repeats $4Ls/6 \rightarrow 5Ls/6 \rightarrow .. 4Ls/6 \rightarrow 5Ls/6$, and the electromagnet A1 repeats $2Ls/6 \rightarrow 3Ls/6 \rightarrow ..2Ls/6 \rightarrow 3Ls/6$.

In other words, when the position of each electromagnet 24 relative to the salient pole at the position of X=0 (XW coordinates) of the moving part 21 is set, the value of X (position of the moving part 21) after the coordinate conversion can be determined by preliminarily dividing the relative position (any position of the equally divided six sections) of each electromagnet 24 in such a manner as evaluating the value of X by dividing by Ls/6.

Further, this motor operates the moving part 21 with the attraction force between the electromagnet 24 and the salient pole 22. As shown in Fig. 10, when the motor operates the moving part 21 in a positive direction of the X-axis, the electromagnet 24 relatively positioned in 3 Ls/6 through 6Ls/6 is selected as the electromagnet for exciting. When the moving part 21 is operated in the negative direction of the X-axis, the electromagnet 24 relatively positioned in 0 through 3 Ls/6 is selected as the electromagnet for exciting. Consequently, with respect to the operation of the moving part 21 in the direction of X-axis, there are twelve excitation patterns, which is determined by the equation of 6 (moving part positions) x 2 (operation directions)= 12. (With respect to the W-axis, there are twelve excitation patterns, obtained by dividing the space between salient poles into six sections.) The part of the controller which holds the excitation patterns with the combination of the moving part positions and the operation directions is the electromagnet excitation selection part 31.

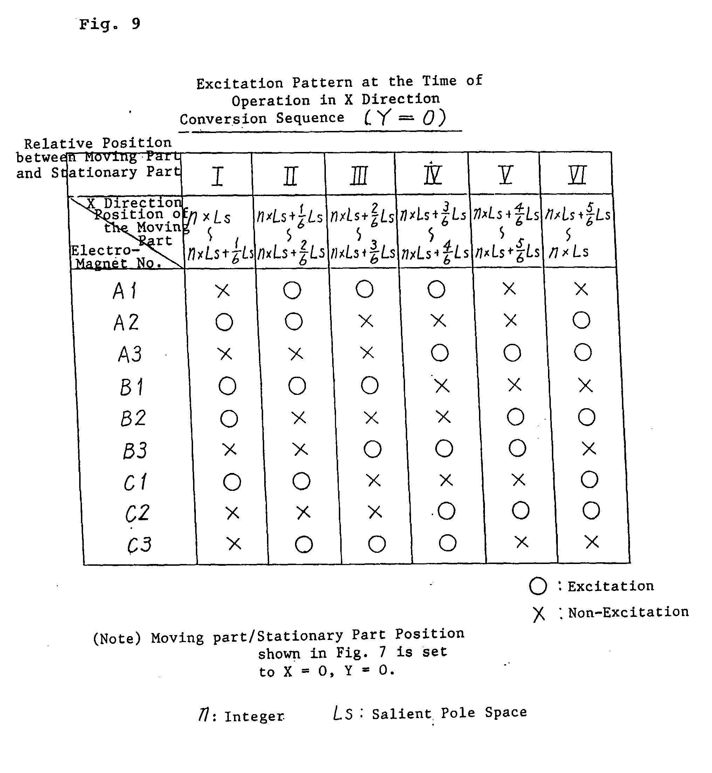

Fig. 9 shows the excitation patterns of each of the electromagnets A1 to C3 when the moving part 21 is actuated in the positive direction of the X-axis, the view is showing that when the moving part 21 is located at the relative position I of X=0 to Ls/6 (=n x Ls to n x Ls + Ls/6), the electromagnets A2, B1, B2, and C1 are excited while electromagnets A1, A3, B3, C2 and C3 are not excited.

In the meantime, the electromagnet excitation selection part 31 receives as input the operation direction instruction shown in Fig. 3 and converts the instruction into an operation direction instruction of XW coordinates on the basis of the above-mentioned equation 1 to determine which of the operation instructions is adopted, the positive direction operation instruction of X and W-axes or the negative direction operation instruction thereof. Then the electromagnets 24 to be excited are selected from the excitation patterns on the basis of the relative position determined from this operation direction instruction and the moving part/stationary part relative position calculation part 29.

Further, the X-direction/Y-direction synthetic ratio calculation part 32 inputs the operation direction instruction to convert the operation direction instruction into a operation direction instruction of the XW coordinates. After that, on the basis of the synthesis ratio shown in the following (equation 2), time A for operating the moving part 21 in the X-axis direction and time B for operating the moving part 21 in the W-axis direction are determined as shown in equation 3 ($\Delta$T is a very short time interval which can be voluntarily set and is expressed as $\Delta$T=A + B), time A is output to the electromagnet excitation selection part 31 as a signal associated with the operation in the X-axis direction while time B is output to the same part 31 as a signal associated with an operation in the W-axis operation.

XW coordinates expression of the operation direction $\delta$

(XY expression); the XW coordinates expression becomes a ratio of x' and w by substituting X=cos $\delta$ and Y=sin $\delta$ in equation 1, whereupon the following (equation 2) is obtained.

$$x' : w = \cos (\delta - 30°) : \sin \delta \qquad \text{(equation 2)}$$

From equation 2 the following result is given. X direction : W direction = cos ($\delta$ - 30°): sin $\delta$

$$A = \{ \cos (\delta - 30°)/(\cos (\delta - 30°) + \sin \delta) \} \Delta T$$

$$B = \{ \sin \delta /(\cos (\delta - 30°) + \sin \delta) \} \Delta T \qquad \text{(equation 3)}$$

In the case where a signal input from the X-direction/ Y-direction synthetic ratio calculation part 32 is at time A, the exciting electromagnet selection part 31 outputs the excitation pattern associated with the X-axis direction to the exciting current output part 33. When the signal is at time B, the calculation part 32 outputs the excitation pattern associated with the W-axis direction to the exciting current output part 33. The exciting current output part 33 outputs the exciting current to the electromagnet 24 in accordance with it. During this output operation, a calculation for determining the next excitation pattern is performed at the same time.

As described above, in accordance with the second embodiment, every time the position of the moving part 21 moves by an amount Ls/6, the controller switches over the excitation pattern, and time A and time B are alternately repeated with the result that the moving part 21 is moved in the operation direction (it is preliminarily set in advance as to whether the operation is initiated at time A or time B).

Additionally, since the movement is both X-axis direction movement and W-axis direction movement, a variation in the driving force can be reduced compared with the operating motor with two degrees of freedom according to the motor of Figs. 1-6.

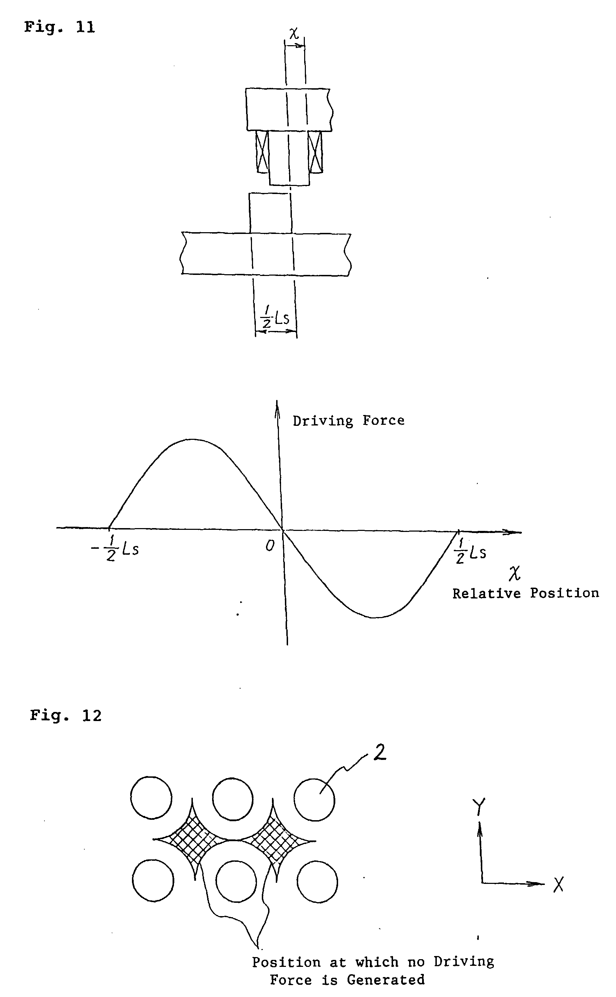

In other words, in the relative position relation between the electromagnet and the magnetic body shown in Fig. 11 with the motor of Figs. 1-6, the driving force cannot be generated. Consequently, when the electromagnets and the magnetic bodies are arranged in the axial line direction and the orthogonal circumferential direction, the driving force cannot be obtained in any direction when the electromagnet is located in the hatched part relative to the magnetic bodies 2 shown in Fig. 12.

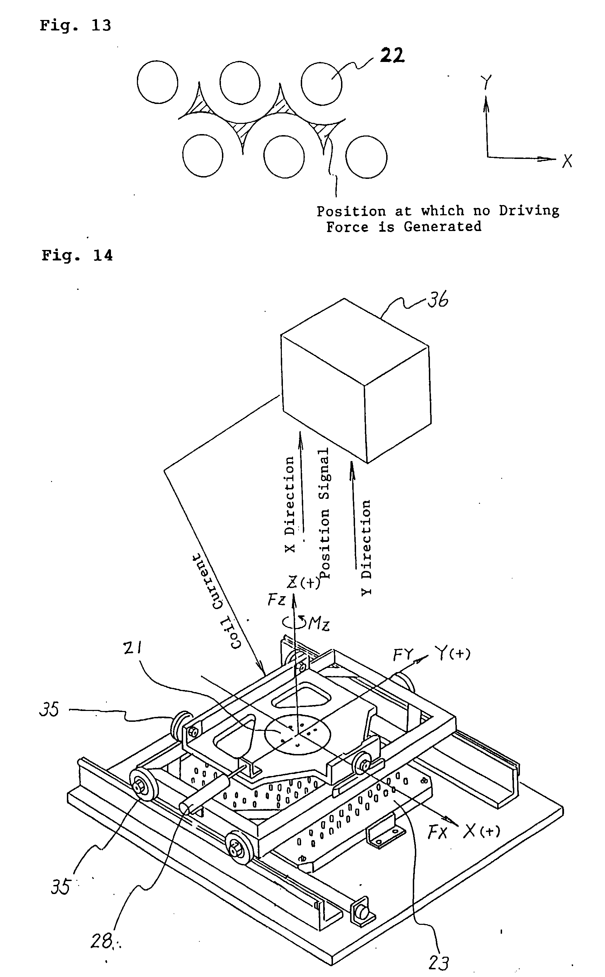

Consequently, the ratio of the excited electromagnets which can generate the driving force varies. In accordance with the variation, the driving force varies. In the meantime, when the arrangement of the electromagnets 24 and the magnetic bodies 22 are directed in two straight lines forming an angle of 60° as explained in the first embodiment, the range of position of the electromagnets that cannot generate the driving force can be reduced as shown in the hatched part of Fig. 13 with the result that the variation in the driving force can be reduced.

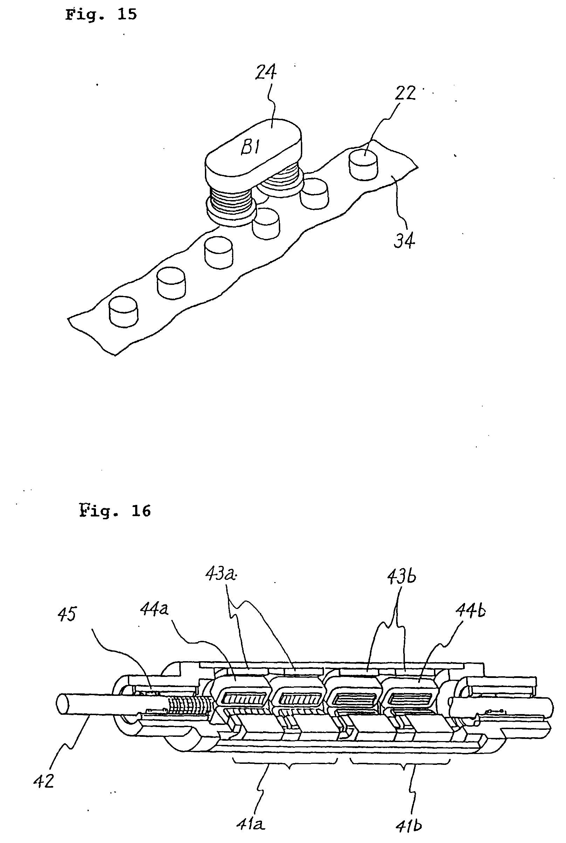

Fig. 14 is a perspective view showing a concrete embodiment of the two freedom degree operation motor having a flat configuration. Fig. 15 is an expanded view of the stationary part and the moving part as shown in Fig. 14.

In Figs. 14 and 15, reference numeral 21 denotes a flat-shaped moving part in which U-shaped electromagnets 24 are arranged at a predetermined interval on two straight lines forming an angle of 60° on the surface facing the stationary part 23. The flat-shaped stationary part 23 comprises a yoke 34 which is a magnetic body and a plurality of salient poles (magnetic bodies) 22 located at a constant interval so as to correspond to the above two straight lines. Reference numeral 35 denotes bearings for movement in the X and Y directions, and 28 denotes a position sensor of the moving part 21 in the X direction. Reference numeral 36 denotes a controller which has the same function as the the controller according to the second embodiment. Even in such flat-shaped operating motor with two degrees of freedom, the variation in the driving force can be reduced as in the first embodiment by arranging the electromagnets 24 and the salient poles 22 on two straight lines forming an angle of 60°.

## Claims

1. An operating motor with two degrees of freedom for performing a rotation and a linear movement, characterized by comprising:

   a moving part (21) having magnetic bodies (22) embedded at a predetermined interval on two straight lines mutually forming an angle of 60 degrees on a completely cylindrical outside surface; and
   a stationary part (23) which embraces and allows the moving part (21) to be movably passed through the inside thereof having a cylindrical body mounted with electromagnets (24) on an inside surface thereof at a predetermined interval in directions to coincide with said two straight lines and a bearing freely and movably supporting the moving part, using as a part of the bearing the outside surface of the above-mentioned moving part.

2. An operating motor with two degrees of freedom according to claim 1, characterized in that said magnetic bodies and said electromagnets are exchanged with each other, the electromagnets (24) being arranged in said moving part (21), and the magnetic bodies (22) being arranged in said stationary part.

3. A controller for controlling the operating motor with two degrees of freedom according to claim 1 or 2, characterized by comprising:

   a detector (28) for detecting each position of said moving part in an axial direction and a circumferential direction;
   a calculator (29) for calculating a relative position between said moving part (21) and said stationary part (23) by converting said position signal detected by said detector into a position signal in said two straight line directions;
   a selection part (31) for determining an electromagnet (24) to be excited on the basis of said relative position calculated at said calculator and an operation direction instruction signal converted into said two straight line directions; and
   an output part (33) for electrifying the electromagnet (24) determined at said selection part.

4. A controller for controlling the operating motor with two degrees of freedom according to claim 3, characterized in that said selection part (31) receives as input a moving ratio between the desired movements of said moving part along said two straight line directions, based on the operation direction instruction signal, and determines an electromagnet to be excited to repeat the axial and the circumferential direction movement of said moving part (21) in accordance with the time distribution obtained by an equation, "short time interval" x "moving ratio".

5. A controller for controlling an operating motor with two degrees of freedom having a moving part embedded with magnetic bodies (2) at a predetermined interval in an axial direction and a circumferential direction in a completely cylindrical outside surface; and

   a stationary part (3) which embraces and allows the moving part to be movably passed through the inside thereof having a cylindrical body mounted with electromagnets (4) on an inside surface thereof at a predetermined interval in the said axial direction and circumferential direction, and a bearing (5) freely and movably supporting the moving part (1), using as a part of the bearing the outside surface of the above-mentioned moving part; characterized by comprising:
   detectors (7, 8) for detecting each position of the moving part (1) in an axial and a circumferential direction;
   a calculator (9) for calculating a relative position between the moving part (1) and the stationary part (3) based on the position signal detected by said detector;
a selection part (12) for determining an electromagnet (4) to be excited based on the relative position and an operation direction instruction signal; and
an output part (13) for electrifying the electromagnet (4) selected by said selection part;

wherein said selection part (12) receives as input a moving ratio between the desired movements of said moving part along the said axial direction and circumferential direction, based on said operation direction instruction signal, and determines the electromagnet (4) to be excited to repeat the axial and the circumferential direction movement of said moving part in accordance with the time distribution obtained by an equation, "short time interval" x "moving ratio".

## Patentansprüche

1. Ein Motor für Betrieb mit zwei Freiheitsgraden zum Durchführen einer Rotation und einer linearen Bewegung, mit folgenden Merkmalen:

   ein bewegliches Teil (21) mit Magnetkörpern (22), die in einem vorbestimmten Intervall auf zwei Geraden, die miteinander einen Winkel von 60 Grad bilden, auf einer vollständig zylindrischen Außenoberfläche eingebettet sind; und
   ein stationäres Teil (23), das das bewegliche Teil (21) umgreift und es dem beweglichen Teil (21) ermöglicht, bewegbar durch das Innere desselben hindurchgeführt zu werden, und das einen zylindrischen Körper mit auf einer Innenoberfläche desselben in einem vorbestimmten Intervall in Richtungen, die mit den zwei Geraden koinzidieren, angebrachten Elektromagneten (24) und einem Lager, das das bewegliche Teil frei und bewegbar trägt, wobei als Teil des Lagers die Außenoberfläche des obenerwähnten beweglichen Teils verwendet wird.

2. Ein Motor für Betrieb mit zwei Freiheitsgraden gemäß Anspruch 1, dadurch gekennzeichnet, daß die Magnetkörper und die Elektromagneten miteinander ausgetauscht werden, wobei die Elektromagneten (24) in dem beweglichen Teil (21) angeordnet sind, und die Magnetkörper (22) in dem stationären Teil angeordnet sind.

3. Eine Steuereinheit zum Steuern des Motors für Betrieb mit zwei Freiheitsgraden gemäß Anspruch 1 oder 2, mit folgenden Merkmalen:

   ein Detektor (28) zum Erfassen jeder Position des beweglichen Teils in einer axialen Richtung und einer Umfangsrichtung;
   eine Berechnungsvorrichtung (29) zum Berechnen einer relativen Position zwischen dem beweglichen Teil (21) und dem stationären Teil (23) durch Konvertieren des durch den Detektor erfaßten Positionssignals in ein Positionssignal in den beiden Geraden-Richtungen;
   ein Selektionsteil (31) zum Bestimmen eines Elektromagneten (24), der auf der Grundlage der an der Berechnungsvorrichtung berechneten relativen Position und einem Betriebsrichtungs-Anweisungssignal, das in die beiden Geraden-Richtungen konvertiert wurde, angeregt werden soll; und
   ein Ausgabeteil (33) zum elektrischen Anregen des an dem Selektionsteil bestimmten Elektromagneten (24).

4. Eine Steuereinheit zum Steuern des Motors für Betrieb mit zwei Freiheitsgraden gemäß Anspruch 3, dadurch gekennzeichnet, daß das Selektionsteil (31) als Eingabe ein Bewegungsverhältnis zwischen den gewünschten Bewegungen des beweglichen Teils entlang der beiden Geraden-Richtungen basierend auf dem Betriebsrichtungs-Anweisungssignal empfängt, und einen Elektromagneten bestimmt, der anzuregen ist, um die axiale und Umfangsrichtungsbewegung des beweglichen Teils (21) gemäß der durch eine Gleichung, "Kurzzeitintervall" x "Bewegungsverhältnis", erhaltenen Zeitverteilung zu wiederholen.

5. Eine Steuereinheit zum Steuern eines Motors für Betrieb mit zwei Freiheitsgraden, der ein bewegliches Teil, in das Magnetkörper (2) in einem vorbestimmten Intervall in einer axialen Richtung und einer Umfangsrichtung in einer vollständig zylindrischen Außenoberfläche eingebettet sind, und

   ein stationäres Teil (3), das das bewegliche Teil umgreift und es dem beweglichen Teil ermöglicht, bewegbar durch das Innere desselben hindurchgeführt zu werden, und das einen zylindrischen Körper mit auf einer Innenoberfläche desselben in einem vorbestimmten Intervall in der axialen Richtung und der Umfangsrichtung angebrachten Elektromagneten (4) aufweist, sowie ein Lager (5), das das bewegliche Teil (1) frei und bewegbar trägt, wobei als ein Teil des Lagers die Außenoberfläche des obenerwähnten beweglichen Teils verwendet wird, aufweist; gekennzeichnet durch folgende Merkmale:

Detektoren (7,8) zum Erfassen jeder Position des beweglichen Teils (1) in einer axialen Richtung und einer Umfangsrichtung;

eine Berechnungsvorrichtung (9) zum Berechnen einer relativen Position zwischen dem beweglichen Teil (1) und dem stationären Teil (3) basierend auf dem durch den Detektor erfaßten Positionssignal;

ein Selektionsteil (12) zum Bestimmen eines Elektromagneten (4), der auf der Grundlage der relativen Position und einem Betriebsrichtungs-Anweisungssignal anzuregen ist; und

einen Ausgabeteil (13) zum elektrischen Anregen des Elektromagneten ( 4), der durch das Selektionsteil ausgewählt wurde;

wobei das Selektionsteil (12) als Eingabe ein Bewegungsverhältnis zwischen den gewünschten Bewegungen des beweglichen Teils entlang der axialen Richtung und der Umfangsrichtung basierend auf dem Betriebsrichtungs-Anweisungssignal empfängt und den Elektromagneten (4) bestimmt, der anzuregen ist, um die axiale und Umfangsrichtungsbewegung des beweglichen Teils gemäß der durch eine Gleichung, "Kurzzeitintervall" x "Bewegungsverhältnis", erhaltenen Zeitverteilung zu wiederholen.

**Revendications**

1. Un moteur à deux degrés de liberté d'opération, pour effectuer une rotation et un déplacement linéaire, caractérisé par le fait de comprendre :

une partie mobile (21) ayant des corps magnétiques (22) noyés à intervalles prédéterminés sur deux lignes droites formant mutuellement un angle de 60 degrés sur une surface extérieure complètement cylindrique; et une partie stationnaire (23) englobant la partie mobile (21) en lui permettant de passer de façon mobile à l'intérieur d'elle, ayant un corps cylindrique équipé d'électroaimants (24) sur une surface intérieure de celui-ci à un espacement prédéterminé dans des directions coïncidant avec lesdites deux lignes droites, et un palier supportant de façon libre et mobile la partie mobile, utilisant comme partie du palier la surface extérieure de la partie mobile mentionnée ci-dessus.

2. Un moteur d'opération ayant deux degrés de liberté selon la revendication 1, caractérisé en ce que lesdits corps magnétiques et lesdits électroaimants sont interchangés, les électroaimants (24) étant agencés dans ladite partie mobile (21), et les corps magnétiques (22) étant agencés dans ladite partie stationnaire.

3. Un dispositif de commande peut commander le moteur d'opération ayant deux degrés de liberté selon la revendication 1 ou 2, caractérisé par le fait de comprendre :

un détecteur (28) pour détecter chaque position de ladite partie mobile dans une direction axiale et une direction circonférentielle;
un calculateur (29) pour calculer une position relative entre ladite partie mobile (21) et ladite partie stationnaire (23), par une conversion dudit signal de position, détecté par ledit détecteur, en un signal de position dans lesdites deux directions de ligne droite;
une partie de sélection (31) pour déterminer quel est l'électroaimant (24) à exciter, sur la base de ladite position relative calculée au niveau dudit calculateur et d'un signal d'instruction de direction d'opération converti en lesdites deux directions de ligne droite; et
une partie de sortie (33) pour alimenter électriquement l'électroaimant (24) déterminé à ladite partie de sélection.

4. Un dispositif de commande pour commander le moteur d'opération ayant deux degrés de liberté selon la revendication 3, caractérisé en ce que ladite partie de sélection (31) reçoit comme entrée un rapport mobile entre les déplacements souhaités de ladite partie mobile sur lesdites deux directions lignes droites, en se basant sur le signal d'instruction de direction d'opération, et détermine quel est l'électroaimant à exciter pour répéter le déplacement en direction axiale et circonférentielle de ladite partie mobile (21) selon la distribution temporelle obtenue par l'équation "intervalle de temps court" x "rapport mobile".

5. Un dispositif de commande pour commander un moteur d'opération ayant deux degrés de liberté ayant une partie mobile noyée avec des corps magnétiques (2) à un espacement prédéterminé dans une direction axiale et dans une direction circonférentielle, dans une surface extérieure complètement cylindrique; et

une partie stationnaire (3) englobant la partie mobile et lui permettant de passer de façon mobile par l'intérieur d'elle, ayant un corps cylindrique équipé d'électroaimants (4) sur une surface intérieure de celui-ci, à un espacement prédéterminé dans ladite direction axiale et ladite direction circonférentielle, et un palier (5) supportant, de façon libre et mobile, la partie mobile (1), en utilisant, à titre de partie du palier, la surface extérieure de la partie mobile mentionnée ci-dessus;

caractérisé par le fait de comprendre :

des détecteurs (7, 8) pour détecter chaque position de la partie mobile (1) dans une direction axiale et une direction circonférentielle;

un calculateur (9) pour calculer une position relative entre la partie mobile (1) et la partie stationnaire (3) en se basant sur le signal de position détecté par ledit détecteur;

une partie de sélection (12) pour déterminer un électroaimant (4) devant être excité, en se basant sur la position relative et un signal d'instruction de direction d'opération; et

une partie de sortie (13), destinée à alimenter électriquement l'électroaimant (4) sélectionné par ladite partie de sélection;

dans lequel ladite partie de sélection (12) reçoit, à titre d'entrée, un rapport mobile entre les déplacements souhaités de ladite partie mobile sur lesdites direction axiale et direction circonférentielle, en se basant sur le signal d'instruction de direction d'opération, et détermine quel est l'électroaimant (4) à exciter pour répéter le déplacement à direction axiale et circonférentielle de ladite partie mobile, en fonction de la distribution temporelle obtenue par une équation "intervalle de temps court" x "rapport mobile".

Fig. 1

Fig. 2

Fig. 3

Circumferential Direction
$\sin \delta$

Operation Direction

$\delta$: Operation Direction Instruction

Axial Direction
$\cos \delta$

Fig. 4

Excitation in
Axial Direction

Time

Excitation in
Circumferential
Direction

A          B

$\Delta T$

$$A = \frac{\cos \delta}{\cos \delta + \sin \delta} \Delta T$$

$$B = \frac{\sin \delta}{\cos \delta + \sin \delta} \Delta T$$

$\Delta T$ = Definite (fine time)

13

**Fig. 5 (A)**

Axial Direction

Circumferential Direction

State of Linear Operation (Time Series)

**Fig. 5 (B)**

Electromagnet No.

| Operation State | 1 | 2 | 3 | 4 | 5 | 6 | 7 | 8 | 9 |
|---|---|---|---|---|---|---|---|---|---|
| I | × | × | ○ | × | × | ○ | × | × | ○ |
| II | ○ | × | × | ○ | × | × | ○ | × | × |
| III | × | ○ | × | × | ○ | × | × | ○ | × |

○ : *ON* (Excitation)

× : *OFF* (Non-Excitation)

Fig. 6

| | 1 | 2 | 3 | 4 | 5 | 6 | 7 | 8 | 9 |
|---|---|---|---|---|---|---|---|---|---|
| I | ○ | ○ | ○ | × | × | × | × | × | × |
| II | × | × | × | × | × | × | ○ | ○ | ○ |
| III | × | × | × | ○ | ○ | ○ | × | × | × |

Fig. 7

Fig. 8

28

30

$x, y$

29

$\delta$

XW Coordinate Expression
of $\delta$ (XY Coordinate
Expression )

Assignment of Fig. 9I
through VI after
XY – XW Coordinate
Conversion

$A, B$

31

Selection of
Electromagnet
in Fig. 9 by
State of
Excitation

32

(Calculation of AB)
(Equation 3)

33

To Each Electromagnet

16

Fig. 9

Excitation Pattern at the Time of
Operation in X Direction
Conversion Sequence $(Y = 0)$

Relative Position between Moving Part and Stationary Part

| X Direction Position of the Moving Part / Electro-Magnet No. | I $n \times Ls$ to $n \times Ls + \frac{1}{6} Ls$ | II $n \times Ls + \frac{1}{6} Ls$ to $n \times Ls + \frac{2}{6} Ls$ | III $n \times Ls + \frac{2}{6} Ls$ to $n \times Ls + \frac{3}{6} Ls$ | IV $n \times Ls + \frac{3}{6} Ls$ to $n \times Ls + \frac{4}{6} Ls$ | V $n \times Ls + \frac{4}{6} Ls$ to $n \times Ls + \frac{5}{6} Ls$ | VI $n \times Ls + \frac{5}{6} Ls$ to $n \times Ls$ |
|---|---|---|---|---|---|---|
| A1 | × | ○ | ○ | ○ | × | × |
| A2 | ○ | ○ | × | × | × | ○ |
| A3 | × | × | × | ○ | ○ | ○ |
| B1 | ○ | ○ | ○ | × | × | × |
| B2 | ○ | × | × | × | ○ | ○ |
| B3 | × | × | ○ | ○ | ○ | × |
| C1 | ○ | ○ | × | × | × | ○ |
| C2 | × | × | × | ○ | ○ | ○ |
| C3 | × | ○ | ○ | ○ | × | × |

○ : Excitation
X : Non-Excitation

(Note) Moving part/Stationary Part Position
shown in Fig. 7 is set
to X = 0, Y = 0.

$n$ : Integer    $Ls$ : Salient Pole Space

Fig. 10

Relative Position of Moving Part/ Stationary Part

Salient Pole

X Direction

Position of Fig. 7

Relative Position of Fig. 10

Excitation Area

Fig. 11

Driving Force

$-\frac{1}{2}Ls$

$0$

$\frac{1}{2}Ls$

$\chi$

Relative Position

Fig. 12

2

Y

X

Position at which no Driving
Force is Generated

Fig. 13

Position at which no Driving
Force is Generated

Fig. 14

Fig. 15

Fig. 16